# EUROPEAN PATENT SPECIFICATION

(11) **EP 1 069 157 B1**
(45) Date of publication and mention of the grant of the patent: **27.10.2004**
(21) Application number: 99125559.7
(22) Date of filing: 21.12.1999
(51) Int. Cl.: C08K 5/523, C08L 71/12, C08L 55/02

(54) **Flameproof thermoplastic resin composition**
Flammgeschützte, thermoplastische Harzzusammensetzung
Composition ingnifuge de résine thermoplastique

(30) Priority: 14.07.1999 KR 9928443
(43) Date of publication of application: 17.01.2001
(73) Proprietor: Cheil Industries Inc., Kumi-shi, Kyungbuk (KR)
(72) Inventor: Jang, Bok-Nam, Seoul (KR); Kim, Se-Jong, Uiwang-shi, Kyungki-do (KR); Chang, Young-Kil, Seoul (KR); Lee, Gyu-Cheol, Suwon-shi, Kyungki-do (KR)
(74) Representative: Hering, Hartmut, Dipl.-Ing.

(56) References cited:
- DE-A- 19 618 741
- DE-A- 19 831 321
- PATENT ABSTRACTS OF JAPAN vol. 1996, no. 05, 31 May 1996 (1996-05-31) & JP 08 020717 A (ASAHI CHEM IND CO LTD), 23 January 1996 (1996-01-23)

## Description

The present invention relates to a flameproof thermoplastic resin composition. More particularly, the present invention relates to a flameproof thermoplastic resin composition consisting essentially of a rubber modified styrene-containing resin and a polyphenylene ether resin as a base resin, a styrene-acrylonitrile copolymer containing from 5 to 18 % by weight of acrylonitrile as a compatibilizer, and an aromatic phosphoric acid ester as a flame retardant.

A rubber modified styrene-containing resin has a good processability, a high impact strength, and a good appearance. Accordingly, the resin has been widely applied to electric appliances and office supplies. In case that a rubber modified styrene-containing resin is applied to personal computers, facsimiles, and the like, which emit heat, flame-retardant property should be given to the resin for inhibiting combustibility thereof. A widely known method for the flame retardancy is that a halogen-containing compound or a antimony-containing compound is added to a rubber modified styrene-containing resin to give flame-retardant property. The examples of the halogen-containing compounds used in above method are, for example, polybromodiphenyl ether, tetrabromobisphenol A, epoxy compounds substituted by bromine, chlorinated polyethylene, etc. An antimony trioxide or an antimony pentaoxide is commonly used as an antimony-containing compound.

The methods for improvement of flame-retardant property by applying a halogen- and antimony-containing compound have advantages such as easy acquirement of the flame-retardant property and no degradation of the physical properties. However, the disadvantages could be observed that the halogen-containing compound results in the corrosion of the mold itself by the hydrogen halide gases released during the molding process and is fatally harmful due to the toxic gases liberated in case of fire. Especially, since a polybromodiphenyl ether, mainly used for a halogen-containing flame retardant, can produce toxic gases such as dioxin or furan during combustion, flame retardants which are prepared without a halogen-containing compound have become a major concern in this field.

It is commonly known a method to apply a phosphorus or nitrogen compound as halogen-free flame retardant to a resin composition. However, usage of only a phosphorus compound deteriorates heat resistance of a rubber modified styrene-containing resin and does not impart sufficient flame retardancy.

Generally, when a rubber modified styrene-containing resin such as ABS is burned, a char is not produced due to decomposition and vaporization in most parts (*Journal of Applied Polymer Science*, 1998, vol 68, p1067). Therefore, to impart an effect of flame retardancy, it is necessary to add a char-forming agent to a resin composition, which plays a role to prohibit entrance of oxygen and emission of fuel by forming char on the surface of rubber with three-dimensional carbon chain bonds under combustion.

Japanese Patent Laid-open No. 7-48491 discloses a flameproof thermoplastic resin, made of adding a novolac phenolic resin and a phosphoric acid ester into a thermoplastic copolymer resin composed of a rubber copolymer and an aromatic vinyl monomer. It was found that in order to obtain a good property of flame retardancy, a phenolic resin as a char-forming agent and a phosphoric acid ester compound as a flame retardant should be added in a lot of amount. However, in this case, the heat resistance of the resin composition is dropped suddenly.

U.S. patent application No. 9/233415 discloses a halogen-free flameproof resin composition having a good property of flame retardancy prepared by mixing a styrene-acrylonitrile copolymer having from 5 to 18 % by weight of acrylonitrile as a compatibilizer, an aromatic phosphoric acid ester compound as a main flame-retardant and a phenolic resin as a further flame-retardant to improve flame-retardant property of a resin composition and adding the mixture to a base resin comprising a rubber-modified styrene-containing resin and a polyphenylene ether resin. Good mechanical properties as well as a good improvement of flame retardancy and heat resistance were obtained, however, a phenolic resin used as char-formation agent of ABS resin causes the degradation of heat stability and weatherability.

The present inventors have discovered a flameproof resin composition containing no phenolic resin in order to solve the above-mentioned problem. Generally, as a blend comprising an ABS resin and a polyphenylene ether resin has no compatibility each other, physical properties are degraded during extrusion processing to cause a poor property of mechanical strength. Accordingly, the present inventor have invented phenol-free flameproof thermoplastic resin composition which has a good property of mechanical strength by adding a styrene-acrylonitrile copolymer or styrene-containing graft copolymer containing adjusted acrylonitrile content as a compatibilizer, in order to impart compatibility to a blend comprising an ABS resin and a polyphenylene resin.

An object of the present invention is to provide a thermoplastic resin composition which has good mechanical properties as well as good properties and of flame retardancy, heat resistance and heat stability.

Another object of the present invention is to provide a flameproof thermoplastic resin composition which does not contain a halogen-containing compound which causes the environmental pollution during preparation or combustion of the resin.

A further object of the present invention is to provide a thermoplastic resin composition which contains no phenolic resin and imparts compatibility to a blend comprising an ABS resin and a polyphenylene resin by adding a styrene-acrylonitrile copolymer or styrene-containing graft copolymer containing a particular amount of acrylonitrile as a compatibilizer.

A flameproof thermoplastic resin composition of the present invention consisting essentially of (A) 40 to 95 parts by weight of a rubber modified styrene-containing resin composed of (a₁) 20 to 100% by weight of a styrene-containing graft copolymer resin which contains 18 to 50% by weight of acrylonitrile in the copolymer excluding rubber; and (a₂) 0 to 80% by weight of a styrene-containing copolymer which contains 18 to 50% by weight of acrylonitrile; (B) 5 to 60 parts by weight of a polyphenylene ether resin; (C) 2 to 40 parts by weight of a styrene-containing copolymer or a styrene-containing graft copolymer which uses optionally 60% by weight of rubber, containing 5 to 18% by weight of acrylonitrile in the copolymer excluding rubber component per 100 parts by weight of the sum of (A) and (B); and (D) 5 to 30 parts by weight of an aromatic phosphoric acid ester per 100 parts by weight of the sum of (A) and (B).

The flameproof thermoplastic resin composition according to the present invention consisting essentially of (A) a rubber modified styrene-containing resin composed of (a₁) a styrene-containing graft copolymer and (a₂) optionally, a styrene-containing copolymer; (B) a polyphenylene ether resin; (C) a styrene-acrylonitrile graft copolymer or styrene-containing copolymer containing 5 to 18% by weight of acrylonitrile in the copolymer excluding rubber component; and (D) an aromatic phosphoric acid ester.

It is preferable to blend (A) 40 to 95 parts by weight of a rubber modified styrene-containing resin; (B) 5 to 60 parts by weight of a polyphenylene ether resin; (C) 2 to 40 parts by weight of a styrene-containing copolymer or a styrene-containing graft copolymer which contains 5 to 18% by weight of an acrylonitrile per 100 parts by weight of the sum of (A) and (B); and (D) 5 to 30 parts by weight of an aromatic phosphoric acid ester per 100 parts by weight of the sum of (A) and (B) in the resin composition. The rubber modified styrene-containing resin is composed of (a₁) 20 to 100% by weight of a styrene-containing graft copolymer resin which contains 18 to 50% by weight of acrylonitrile in the copolymer excluding rubber component; and (a₂) 0 to 80% by weight of a styrene-containing copolymer which contains 18 to 50% by weight of acrylonitrile.

The present invention employs a rubber modified styrene-containing resin (A) and a polyphenylene ether resin (B) as a base resin. To improve compatibility between (A) and (B), a styrene-acrylonitrile copolymer or a styrene-containing graft copolymer (C) which optionally uses a rubber, containing 5 to 18% by weight of acrylonitrile excluding rubber, is added to the base resin. An aromatic phosphoric acid (D) is added as flame retardant.

The detailed descriptions of components of the resin composition according to the present invention are as follows:

### (A) Rubber Modified Styrene-containing Resin

A rubber modified styrene-containing resin means that a styrene-containing graft copolymer resin such as ABS, and the graft copolymer resin may contain a styrene-containing copolymer resin such as SAN.

In the rubber modified styrene-containing resin which is prepared of aromatic vinyl copolymers, rubber phase copolymers are dispersed in the form of particles in a matrix. The resin is prepared by mixing an aromatic vinyl monomer and a vinyl group-containing monomer, which can be polymerized therewith, in the presence of a rubber phase polymer. Such rubber-modified styrene-containing resin is prepared by a known method such as emulsion polymerization, suspension polymerization or bulk polymerization, and is conventionally produced by an extrusion with a styrene-containing graft copolymer resin and a styrene-containing copolymer resin. In a bulk polymerization, both a styrene-containing graft copolymer resin and a styrene-containing copolymer resin are prepared together in one process. In other words, one step process is employed to produce a rubber modified styrene-containing resin. In other polymerizations, a styrene-containing graft copolymer resin and a styrene-containing copolymer resin may be prepared separately. In either case, the contents of rubber in a final rubber modified styrene-containing resin to the total weight of the base resin are preferably in 5 to 30% by weight. Examples of such resins are acrylonitrile-butadiene-styrene (ABS) copolymer resin, acrylonitrile-acryl rubber-styrene (AAS) copolymer resin, acrylonitrile-ethylenepropylene rubber-styrene (AES) copolymer resin, and the like.

In the rubber modified styrene-containing resin, a styrene-containing graft copolymer resin can be used alone or in combination with a styrene-containing copolymer resin in consideration of compatibility thereof. In this invention, a rubber modified styrene-containing resin is prepared by mixing 20 to 100% by weight of a styrene-containing graft copolymer resin (a₁) with 0 to 80% by weight of a styrene-containing copolymer (a₂).

### (a₁) Styrene-containing Graft Copolymer Resin

Examples of a rubber used for a styrene-containing graft copolymer resin are a diene-containing rubber such as polybutadiene, poly(styrenebutadiene) and poly(acrylonitrile-butadiene); a saturated rubber in which hydrogen is added to said diene-containing rubber; an isoprene rubber; a chloroprene rubber; a polyacrylic acid butyl; and a terpolymer of ethylenepropylene-diene. It is preferable to use a diene-containing rubber, more preferably a butadiene-containing rubber.

Aromatic vinyl-containing monomers for use preparing the graft copolymer are styrene, α-methylstyrene, p-methylstyrene, etc. In the above examples, styrene is the most preferable. At least one copolymerizable monomer may be introduced and applied to said aromatic vinyl monomers. It is preferred that the copolymerizable monomer is a cyanide vinyl-containing compound such as acrylonitrile or an unsaturated nitrile-containing compound such as methacrylonitrile.

The content of rubber is preferably in the range of 10 to 60% by weight based on the total weight of a graft copolymer resin. Except rubber component, it is preferable that the aromatic vinyl group-containing monomer component is 50 to 82% by weight, and the unsaturated nitrile-containing monomer component is 18 to 50% by weight. In addition, in order to give good characteristics of processability and heat resistance, the monomers such as acrylic acid, methacryl acid, maleic anhydride and N-substituted maleimide can be added in the graft polymerization. The amounts of the monomers are in the range of 0 to 40% by weight based on the styrene-containing graft copolymer resin.

To acquire good impact strength and appearance when said styrene-containing graft copolymer is prepared, the average size of rubber particles is preferably in the range of from 0.1 to 4 µm.

### (a₂) Styrene-containing Copolymer Resin

The styrene-containing copolymer resin of the present invention is prepared by copolymerizing an aromatic vinyl-containing monomer and a copolymerizable monomer, depending on the ratio and compatibility between monomers except rubber in the styrene-containing graft copolymer. The styrene-containing copolymer used in this invention is SAN copolymer resin which contains 18 to 50% by weight of acrylonitrile.

The examples of the aromatic vinyl-containing monomer are styrene, α-methylstyrene, p-methylstyrene, etc. Styrene is the most preferable. The aromatic vinyl-containing monomer in the total copolymer resin is contained in the amount of 50 to 82% by weight. The examples of the copolymerizable monomer are cyanide vinyl group-containing compounds such as acrylonitrile and unsaturated nitrile-containing compounds such as methacrylonitrile. It is preferable that 18 to 50% by weight of the copolymerizable monomer to the total copolymer is employed. In addition, 0 to 40% by weight of a monomer such as acrylic acid, methacrylic acid, maleic anhydride and N-substituted maleimide may be added and copolymerized thereto.

In the present invention, the rubber modified styrene-containing resin (A) is composed of 20 to 100% by weight of a styrene-containing graft copolymer resin (a₁) which contains 18 to 50% by weight of acrylonitrile in the copolymer except rubber and 0 to 80% by weight of a styrene-containing copolymer (a₂) which contains 18 to 50% by weight of acrylonitrile. The rubber modified styrene-containing resin (A) is employed as a base resin along with a polyphenylene ether (B). The base resin comprises 40 to 95 parts by weight of the rubber modified styrene-containing resin (A) and 5 to 60 parts by weight of the polyphenylene ether resin (B).

### (B) Polyphenylene Ether Resin

Polyphenylene ether resin is employed as a base resin to improve flame retardancy, heat resistance and rigidity of the resin composition according to the present invention. As examples of the polyphenylene ether resin, poly(2,6-dimethyl-1,4-phenylene) ether, poly(2,6-diethyl-1,4-phenylene) ether, poly(2,6-dipropyl-1,4-phenylene) ether, poly(2-methyl-6-ethyl-1,4-phenylene) ether, poly(2-methyl-6-propyl-1,4-phenylene) ether, poly(2-ethyl-6-propyl-1,4-phenylene) ether, poly(2,6-diphenyl-1,4-phenylene) ether, copolymer of poly(2,6-dimethyl-1,4-phenylene) ether and poly(2,3,6-trimethyl-1,4-phenylene) ether, and copolymer of poly(2,6-dimethyl-1,4-pheylene) ether and poly(2,3,5-triethyl-1,4-phenylene) ether can be used. Preferably, copolymer of poly(2,6-dimethyl-1,4-phenylene) ether and poly(2,3,6-trimethyl-1,4-phenylene) ether, and poly(2,6-dimethyl-1,4-phenylene) ether are preferably used, more preferably poly(2,6-dimethyl-1,4-phenylene) ether is used. The degree of polymerization of polyphenylene ether is not limited specifically, but considering heat-stability or processability of the resin composition, it is preferable that the viscosity of polypheylene ether is in the range of from 0.1 to 0.8 measured in a chloroform solvent at 25°C.

### (C) Styrene-acrylonitrile Copolymer or Styrene-containing Graft Copolymer Resin Having from 5 to 18% by Weight of Acrylonitrile

A styrene-acrylonitrile copolymer or a styrene-containing graft copolymer is added to the base resin to improve compatibility between the rubber modified styrene-containing resin (A) and the polyphenylene ether resin (B). The styrene-acrylonitrile copolymer or styrene-containing graft copolymer employed in this invention comprise 82 to 95% by weight of a styrene and 5 to 18% by weight of acrylonitrile, exclusive rubber. To prepare the styrene-containing graft copolymer, a styrene-containing coploymer is grafted with up to 60 % by weight of rubber. The method for polymerization of the copolymer above may optionally be selected from emulsion polymerization, suspension polymerization, and bulk polymerization in accordance with the conventional processes. It is preferable that the weight average molecular weight of the copolymer is in the range of from 50,000 to 300,000. A third monomer may be employed for copolymerization with styrene-acrylonitrile. The examples of the third monomer are methacrylate, maleic anhydride, phenyl maleimide, etc. To advance heat resistance, α-methyl styrene may be used instead of styrene. In the present invention, the amount of a styrene-acrylonitrile copolymer or a styrene-containing graft copolymer used as compatibilizer is preferably 2 to 40 parts by weight per 100 parts by weight of the base resin. If the copolymer (C) is not added, the resin composition shows reduction in mechanical properties due to low compatibility.

### (D) Aromatic Phosphoric Acid Ester

The aromatic phosphoric acid ester compound used in the present invention is a compound having the following structural formula ( I ): 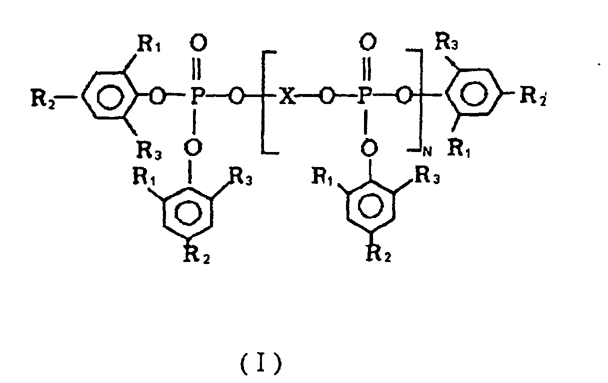 wherein R₁, R₂ and R₃ independently of one another are hydrogen or C₁-C₄ alkyl, X is a dialcohol derivative such as resorcinol, diphenol, hydroquinol, bisphenol-A and bisphenol-S, and N is 0∼4, and when N is 0, at least one of R₁, R₂ and R₃ is not hydrogen.

Where N is 0, the compound represented in the structural formula ( I ) is monophosphate, and examples thereof include tricresyl phosphate, tri(2,6-dimethyl phenyl) phosphate, tri(2,4,6-trimethyl phenyl) phosphate, tri(2,4-ditertiary butyl phenyl) phosphate, tri(2,6-ditertiary butyl phenyl) phosphate, and the like, and where N is 1, the compounds include resorcinolbis(diphenyl) phosphate, resorcinolbis(2,6-dimethyl phenyl) phosphate, resorcinolbis(2,4-ditertiary butyl phenyl) phosphate, hydroquinol (2,6-dimethyl phenyl) phosphate, hydroquinol(2,4-ditertiary butyl phenyl) phosphate, and the like. The compounds can be used alone or in combination therewith.

In addition, a phosphoric acid ester compound having a structure of phloroglucinol can be used in this invention. The phosphoric acid ester compound is represented as follow: 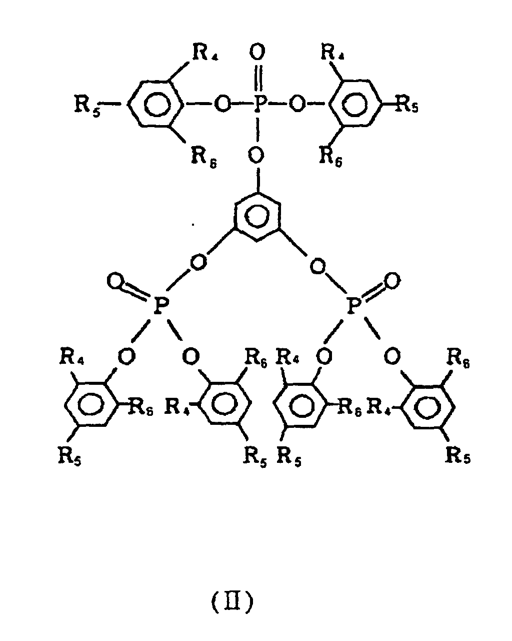 wherein R₄, R₅ and R₆ are hydrogen or C₁-C₄ alkyl.

Examples of the phosphoric acid ester compound having the structural formula (II) include 1,3,5-tri(diphenyl phosphate) fluoroglucinol, 1,3,5-tri(dicresyl phosphate) fluoroglucinol, 1,3,5-tri(dixyenyl phosphate) fluoroglucinol, and the like.

The compounds having the structural formula ( I ) also may be used along with triphenyl phosphate (TPP) in this invention.

However, it is preferable that the compound or mixture thereof has a molecular weight of less than 1,500, because the compound having a molecular weight of more than 1,500 does not provide the resin with a good flame-retardancy. Also, it is preferable that the phosphoric acid ester compound has a melting point of more than 90°C. The phosphoric acid ester compound having a melting point of below 90°C can be used together if the heat deformation temperature required to apply for commercial purposes is maintained at more than 90°C.

In the present invention, the aromatic phosphoric acid ester compound as a flame retardant is used in the amount of from 5 to 30 parts by weight per 100 parts by weight of the base resin.

If necessary, a resin such as polyamide, polycarbonate, polyester, polystyrene, rubber reinforced polystyrene, polyacetal, polymethacrylic acid methyl, and silicon resin may be added optionally to the resin composition of this invention in the amount of from 0 to 30 parts by weight per 100 parts by weight of the base resin.

Other additives may be contained in the resin composition of the present invention. The additives include an anti-dripping agent, an impact modifier, plasticizer, a heat stabilizer, an oxidation inhibitor, a light stabilizer, a compatibilizer and the like. An inorganic filler such as talc, silica, mica, glass fiber, an organic or inorganic pigment and/or dye can be added too. The additives are employed in the amount of 0 to 50 parts by weight on the basis of 100 parts by weight of the base resin.

The resin composition according to the present invention has Izod impact strength (1/8" notched) of 10 to 30kg · cm / cm and heat deformation temperature of more than about 90°C. Further, the resin composition has flame retardancy (1/10") of V-0 or V-1, a good property of heat stability, and good characteristics of other physical properties.

The invention may be better understood by reference to the following examples which are intended for the purpose of illustration and are not to be construed as in any way limiting the scope of the present invention, which is defined in the claims appended hereto. In the following examples, all parts and percentage are by weight unless otherwise indicated.

### Examples

The components to prepare flameproof thermoplastic resin compositions in Examples 1∼3 and Comparative Examples 1∼4 are as follows:

### (A) Rubber Modified Styrene-containing Resin (ABS)

A rubber modified styrene-containing resin was prepared by mixing 40% by weight of a styrene-containing graft copolymer resin with 60% by weight of a styrene-containing copolymer resin.

### (a₁) Styrene-containing Graft Copolymer Resin (ABS)

50 parts of butadiene rubber latex powder, 36 parts of styrene, 14 parts of acrylonitrile and 150 parts of deionized water were blended. To the blend, 1.0 parts of potassium oleate, 0.4 parts of cumenhydroperoxide, 0.2 parts of mercaptan-containing chain transfer agent, 0.4 parts of glucose, 0.01 parts of ferrous sulfate hydrate, and 0.3 parts of sodium pyrophosphate were added. The blend was kept at 75 °C for 5 hours to obtain ABS latex. To the ABS latex, 0.4 parts of sulfuric acid was added, coagulated and dried to obtain styrene-containing graft copolymer resin (g-ABS) in a powder form.

### (a₂) Styrene-containing Copolymer Resin (SAN with 25% by weight of acrylonitrile)

75 parts of styrene, 25 parts of acrylonitrile, 120 parts of deionized water and 0.2 parts of azobisisobutylonitrile were blended. To the blend, 0.4 parts of tricalciumphosphate and 0.2 parts of mercaptan-containing chain transfer agent were added. The resultant solution was heated to 80°C for 90 minutes and kept for 180 minutes. The resultant was washed, dehydrated and dried. Styrene-acrylonitrile copolymer (SAN) having a weight average molecular weight of 160,000 to 200,000 was obtained.

### (B) Polyphenylene Ether Resin

Poly(2,6-dimethyl-1,4-phenylene) ether with an intrinsic viscosity of 0.42 at chloroform solution was used. The particles had the average size of several microns (µm).

### (C) Styrene-acrylonitrile Copolymer (SAN with 13 % by weight of acrylonitrile)

87 parts of styrene, 13 parts of acrylonitrile, 120 parts of deionized water, 0.1 parts of azobisisobutylonitrile, 0.2 parts of 1,1'-di(tertiarybutylperoxy)-3,3',5-trimethylcyclohexane, 0.4 parts of tricalcium phosphate and 0.2 parts of mercaptan-containing chain transfer agent were blended. The resulting solution was heated up to 80°C for 90 minutes and was kept it for 150 minutes. The solution was heated up to 95°C again and kept for 120 minutes. The resultant was washed, dehydrated and dried. Styrene-acrylonitrile copolymer (SAN) having a weight average molecular weight from 100,000 to 140,000 and 13% by weight of acrylonitrile content was obtained.

### (D) Aromatic Phosphoric Acid Ester

(D₁) Tri(2,6-dimethylphenyl) phosphate with a melting point of 137°C ;
(D₂) Triphenylphosphate(TPP) with a melting point of 48°C; and
(D₃) Resorcinol diphenyl phosphate oligomer(RDP) which is liquid phase at room temperature.

### (E) Phenolic Resin

Novolac phenolic resin of PSM 4324 Grade of Japan Gunei Co. was used herein.

The components to prepare flameproof thermoplastic resin compositions in Examples 1∼3 and Comparative Examples 1∼4 are shown in Table 1.

**Table 1**

| | Examples | | | Comparative Examples | | | |
|---|---|---|---|---|---|---|---|
| | 1 | 2 | 3 | 1 | 2 | 3 | 4 |
| Rubber modified styrene containing resin(A) | 70 | 70 | 70 | 70 | 70 | 100 | 70 |
| Polyphenylene ether(B) | 30 | 30 | 30 | 30 | 30 | - | 30 |
| SAN(AN: 13 wt. %)(C) | 20 | 20 | 20 | - | 20 | 20 | - |
| Tri(2,6-dimethylphenyl) phosphate(D₁) | 18 | 14 | 14 | 18 | 18 | 18 | 18 |
| Triphenyl phosphate(D₂) | - | 4 | - | - | - | - | - |
| Resorcinolphenyl phosphate oligomer(D₃) | - | - | 4 | - | - | - | - |
| Phenolic resin(E) | - | - | - | - | 6 | 6 | 6 |

In Examples 1 ∼ 3 and Comparative Examples 1 ∼ 4, the components were blended and extruded in the form of pellets with a twin-screw extruder at 200∼280°C. The pellets were dried at 80 °C for 3 hours and extruded into test specimens in a 6 oz. extruder at molding temperature of 220∼280°C and barrel temperature of 40∼80°C, and the resin pellets were molded into test specimens. Impact strengths of the test specimens of the Examples and Comparative Examples were measured according to Izod impact strength ASTM D-256 (1/8" notched), heat deformation temperatures were measured under load of 4.6kg according to ASTM D-6498, and flame retardancy (1/10") was measured according to UL94 VB. Heat stability was evaluated on the basis of whether color difference(ΔE) between the test specimens was over 1 or whether black speck, black line, yellow line, and the like have been formed, when the test specimens are extruded at 250°C. The test results are presented in Table 2.

**Table 2**

| | Examples | | | Comparative Examples | | | |
|---|---|---|---|---|---|---|---|
| | 1 | 2 | 3 | 1 | 2 | 3 | 4 |
| Impact strength(1/8") (kg ·cm/cm) | 20 | 22 | 15 | 7 | 18 | 28 | 4 |
| heat deformation temp.(°C) | 101 | 95 | 96 | 103 | 98 | 95 | 96 |
| UL 94(1/10") | V-1 | V-1 | V-1 | V-1 | V-1 | fail | V-1 |
| heat stability | good | good | good | good | bad | bad | bad |

A flameproof resin applied for commercial purpose should have Izod impact strength of more than 10, and heat deformation temperature of over about 90°C.

As shown in Examples 1∼3, the resin composition of the present invention had good impact strengths due to styrene-acrylonitrile copolymer or styrene-containing graft copolymer (C) improving compatibility between ABS resin and polyphenylene ether. Further, flame retardancy, heat resistance, and heat stability were enhanced. When compared with impact strengths of 15∼22 obtained in Examples 1∼3, Comparative Example 1 not employing the component (C) showed impact strength reduced to 7. Comparative Examples 2∼4 containing phenolic resin (E) showed much lower heat stability, in comparison with the Examples. The desired flame retardancy was obtained when all the components in Examples were employed, but flame retardancy was not shown in Comparative Example 3 excluding polyphenylene ether (B)

As described above, the resin composition of the this invention obtains good mechanical properties due to compatibility improved by adding the resin (C) to the base resin, and shows good flame retardancy without using a phenolic resin as an auxiliary flame retardant. In addition, heat resistance, impact strength, and heat stability were improved, which was recognized by comparing Example 1 with Comparative Example 2.

In consideration of final heat resistance, the phosphoric acid ester may be used in combination with other phosphoric acid ester compound as shown Examples 2∼3. Furthermore, the mixture of more volatile phosphoric acid ester and less volatile phosphoric acid ester may be used to improve flame retardancy.

The present invention can be easily carried out by an ordinary skilled person in the art.

## Claims

1. A flameproof thermoplastic resin composition consisting essentially of:
(A) 40 to 95 parts by weight of a rubber modified styrene-containing resin composed of (a₁) 20 to 100% by weight of a styrene-containing graft copolymer resin containing 18 to 50% by weight of acrylonitrile in the copolymer excluding rubber and (a₂) 0 to 80% by weight of a styrene-containing copolymer containing 18 to 50% by weight of acrylonitrile;
(B) 5 to 60 parts by weight of a polyphenylene ether resin;
(C) 2 to 40 parts by weight of a styrene-containing copolymer or a styrene-containing graft copolymer which uses up to 60% by weight of rubber, containing 5 to 18% by weight of acrylonitrile in the copolymer excluding rubber, per 100 parts by weight of the sum of (A) and (B); and
(D) 5 to 30 parts by weight of an aromatic phosphoric acid ester per 100 parts by weight of the sum of (A) and (B).

2. The flameproof thermoplastic resin composition as defined in claim 1, wherein said aromatic phosphoric acid ester is represented by following formula ( I ): 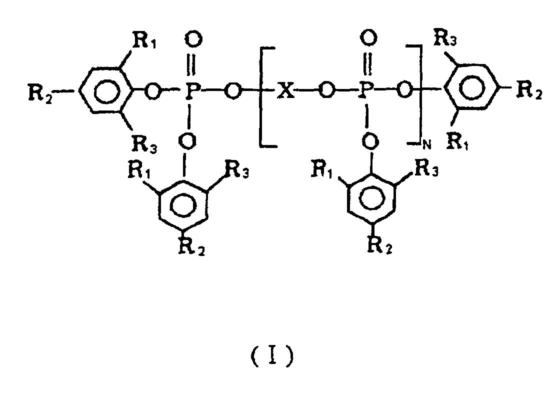 wherein R₁, R₂ and R₃ independently of one another are hydrogen or C₁-C₄ alkyl; X is a dialcohol derivative such as resorcinol, diphenol, hydroquinol, bisphenol-A and bisphenol-S; and N is 0∼4, and in case that N is 0, at least one of R₁, R₂ and R₃ is not hydrogen.

3. The flameproof thermoplastic resin composition as defined in claim 1 or 2, wherein said aromatic phosphoric acid ester is represented by following formula (II): 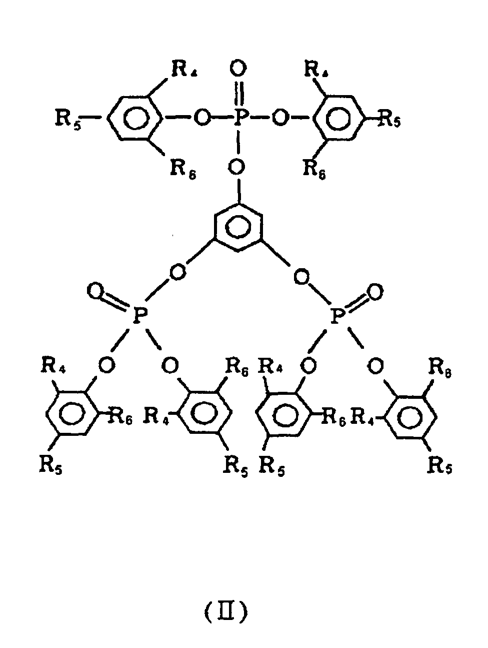 wherein R₄, R₅ and R₆ are hydrogen or C₁-C₄ alkyl.

4. The flameproof thermoplastic resin composition as defined in claim 2, wherein said aromatic phosphoric acid ester (D) further comprises triphenyl phosphate (TPP).

5. The flameproof thermoplastic resin composition as defined in claim 2, wherein said aromatic phosphoric acid ester (D) further comprises monophosphate.

6. The flameproof thermoplastic resin composition as defined in claim 2, wherein said aromatic phosphoric acid ester (D) has a melting point of 90°C or more.

7. The flameproof thermoplastic resin composition as defined in any of preceding claims wherein said polyphenylene ether (B) is poly(2,6-dimethyl-1,4-phenylene) ether.

8. The flameproof thermoplastic resin composition as defined in any of preceding claims wherein said styrene-containing copolymer (C) is further copolymerized with a copolymerizable monomer.

9. The flameproof thermoplastic resin composition as defined in claim 8, wherein said copolymerizable monomer is selected from group consisting of methacrylate, maleic anhydride, and phenyl maleimide.

10. The flameproof thermoplastic resin composition as defined in any of preceding claims wherein said resin composition further comprises 0 to 30 parts by weight of a resin selected from the group consisting of polyamide, polycarbonate, polyester, polystyrene, rubber reinforced polystyrene, polyacetal, polymethacrylic acid methyl, silicon resin and a mixture thereof, per 100 parts by weight of said base resin (A) and (B).

11. The flameproof thermoplastic resin composition as defined in any one of claims 1-10, wherein said resin composition further comprises an anti-dripping agent, an impact modifier, plasticizer, a heat stabilizer, an oxidation inhibitor, a light stabilizer, a compatibilizer, a pigment, a dye and/or an inorganic filler.

12. A molded article produced from the flameproof thermoplastic resin composition as define in any one of claims 1-11.

## Patentansprüche

1. Nicht entflammbare thermoplastische Harzzusammensetzung bestehend im wesentlichen aus:
(A) 40 bis 95 Gewichtsteilen eines kautschuk-modifizierten styrolhaltigen Harzes zusammengesetzt aus (a₁) 20 bis 100 Gewichts-% eines styrolhaltigen Pfropfcopolymer, das 18 bis 50 Gewichts-% Acrylonitril in dem Copolymer, mit Ausnahme des Kautschukanteils, enthält und (a₂) 0 bis 80 Gewichts-% eines Styrol-haltigen Copolymers, das 18 bis 50 Gewichts-% Acrylonitril enthält;
(B) 5 bis 60 Gewichtsteilen eines Polyphenylenetherharzes;
(C) 2 bis 40 Gewichtsteilen eines styrolhaltigen Copolymers oder styrolhaltigen Pfropfcopolymers, das wahlweise bis 60 Gewichts-% Kautschuk verwendet, enthaltend 5 bis 18 Gewichts-% Acrylonitril in dem Copolymer, mit Ausnahme des Kautschukanteils, pro 100 Gewichtsteilen der Summe von (A) und (B); und
(D) 5 bis 30 Gewichtsteilen aromatischem Phosphorsäureester pro 100 Gewichtsteilen der Summe von (A) und (B).

2. Nicht entflammbare thermoplastische Harzzusammensetzung nach Anspruch 1, bei der der aromatische Phosphorsäureester durch die folgende Formel (I) dargestellt ist: 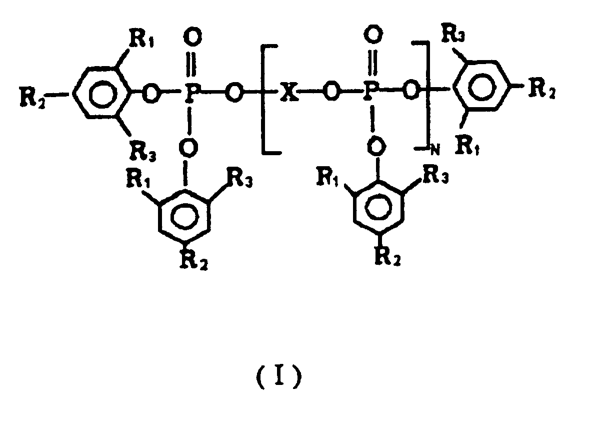 wobei R₁, R₂ und R₃ unabhängig voneinander Wasserstoff oder C₁-C₄-Alkyl sind, X ist ein Derivat eines Diolderivats, wie Resorcinol, Diphenol, Hydrochinon, Bisphenol-A und Bisphenol-S und N ist 0 - 4, und wenn N gleich 0 ist, ist wenigstens eine Gruppe R₁, R₂ und R₃ kein Wasserstoff.

3. Nicht entflammbare thermoplastische Harzzusammensetzung nach einem der Ansprüche 1 oder 2, bei der der aromatische Phosphorsäureester durch die folgende Formel (II) dargestellt ist: 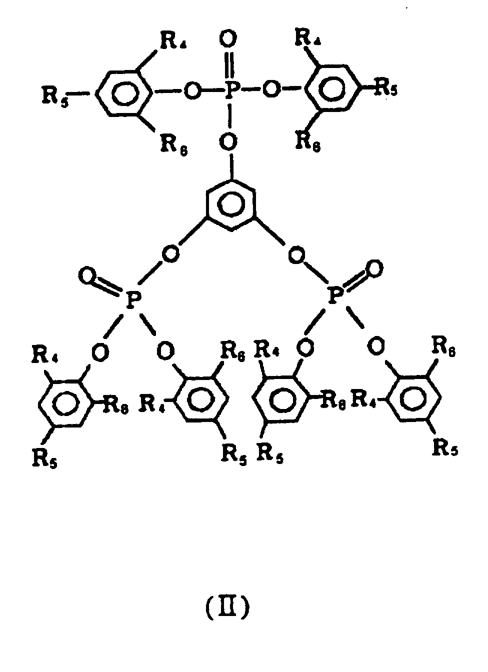 wobei R₄, R₅ und R₆ Wasserstoff oder C₁-C₄-Alkyl sind.

4. Nicht entflammbare thermoplastische Harzzusammensetzung nach Anspruch 2, bei der der aromatische Phosphorsäureester (D) außerdem Triphenylphosphat (TPP) umfaßt.

5. Nicht entflammbare thermoplastische Harzzusammensetzung nach Anspruch 2, bei der der aromatische Phosphorsäureester (D) außerdem Monophosphat umfaßt.

6. Nicht entflammbare thermoplastische Harzzusammensetzung nach Anspruch 2, bei der der aromatische Phosphorsäureester (D) einen Schmelzpunkt von 90°C oder mehr hat.

7. Nicht entflammbare thermoplastische Harzzusammensetzung nach einem der vorherigen Ansprüche, bei der das Polyphenylenharz (B) Poly-(2,6-dimethyl-1,4-phenylen)ether ist.

8. Nicht entflammbare thermoplastische Harzzusammensetzung nach einem der vorherigen Ansprüche, bei der das styrolhaltige Copolymerharz (C) weiterhin mit einem copolymerisierbaren Monomer copolymerisiert ist.

9. Nicht entflammbare thermoplastische Harzzusammensetzung nach Anspruch 8, bei der das copolymerisierbare Monomer ausgewählt wird aus der Gruppe bestehend aus Methacrylat, Maleinsäureanhydrid und Phenylmaleimid.

10. Nicht entflammbare thermoplastische Harzzusammensetzung nach einem der vorherigen Ansprüche, bei der die Harzzusammensetzung weiterhin 0 bis 30 Gewichtsteile eines Harzes ausgewählt aus der Gruppe bestehend ausPolyamid, Polycarbonat, Polyester, Polystyrol, Kautschuk verstärktes Polystyrol, Polyacetal, Polymethylmethyacrylsäuremetyl, Silikonharz und/oder einer Mischung daraus pro 100 Gewichtsteilen des Grundharzes (A) und (B) umfaßt.

11. Nicht entflammbare thermoplastische Harzzusammensetzung nach einem der Ansprüche 1 bis 10, bei der die Harzzusammensetzung außerdem Antitropfmittel, Schlagmodifikationsmittel, Weichmacher, Hitzestabilisatoren, Oxidationsinhibitoren, Lichtstabilisatoren, Kompatibilitätsmittel, Pigment, Farbstoff und/oder anorganische Füllmittel umfaßt.

12. Formteil hergestellt aus der nicht entflammbaren thermoplastischen Harzzusammensetzung, wie sie in einem der Ansprüche 1 bis 11 definiert ist.

## Revendications

1. Une composition en résine thermoplastique ignifuge consistant essentiellement en:
(A) 40 à 95 parties en poids d'une résine contenant du styrène modifiée par du caoutchouc composée de (a1) 20 à 100% en poids d'une résine de copolymère greffé contenant du styrène contenant 18 à 50% en poids d'acrylonitrile dans le copolymère à l'exclusion du caoutchouc et (a2) 0 à 80% en poids d'un copolymère contenant du styrène contenant 18 à 50% en poids d'acrylonitrile;
(B) 5 à 60 parties en poids d'une résine de poly phénylène éther;
(C) 2 à 40 parties en poids d'un copolymère contenant du styrène ou d'un copolymère greffé contenant du styrène qui utilise jusqu'à 60% en poids de caoutchouc, contenant 5 à 18% en poids d'acrylonitrile dans le copolymère à l'exclusion du caoutchouc, pour 100 parties en poids de la somme de (A) et de (B); et
(D) 5 à 30 parties en poids d'un ester d'acide phosphorique aromatique pour 100 parties en poids de la somme de (A) et de (B).

2. La composition en résine thermoplastique ignifuge selon la revendication 1, dans laquelle ledit ester d'acide phosphorique aromatique est représenté parla formule (I): 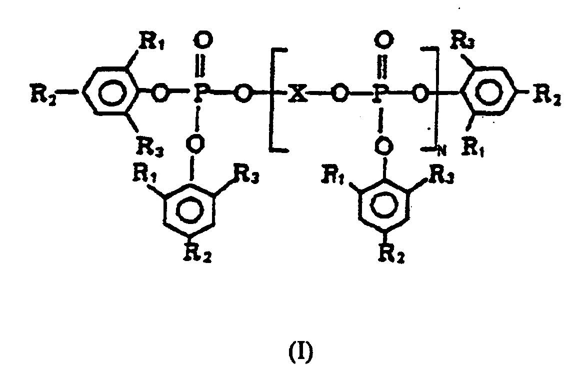 dans laquelle R₁, R₂ et R₃ indépendamment les uns des autres sont un hydrogène ou un alkyle C₁-C₄; X est un dérivé de dialcool tel que le résorcinol, le diphénol, l'hydroquinone, le diphénol-A et le diphénol-S; et N est 0-4, et dans le cas où N est 0, au moins l'un des R₁, R₂ et R₃ n'est pas un hydrogène.

3. La composition en résine thermoplastique ignifuge selon la revendication 1 ou 2, dans laquelle ledit ester d'acide phosphorique aromatique est représenté par la formule (II): 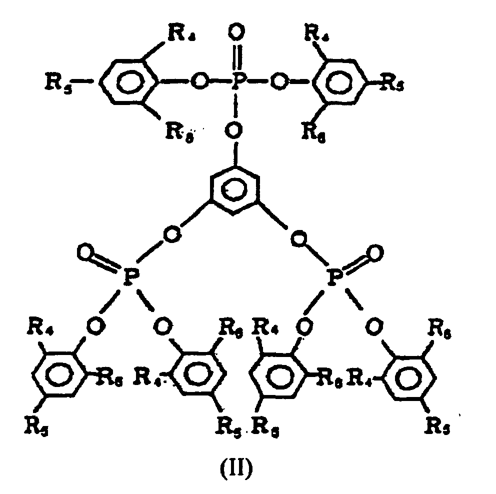 dans laquelle R₄, R₅ et R₆ sont un hydrogène ou un alkyle C₁-C₄.

4. La composition en résine thermoplastique ignifuge selon la revendication 2, dans laquelle ledit ester d'acide phosphorique aromatique (D) comprend en outre du phosphate de triphényle (TPP).

5. La composition en résine thermoplastique ignifuge selon la revendication 2, dans laquelle ledit ester d'acide phosphorique aromatique (D) comprend en outre du monophosphate.

6. La composition en résine thermoplastique ignifuge selon la revendication 2, dans laquelle ledit ester d'acide phosphorique aromatique (D) a un point de fusion de 90°C ou plus.

7. La composition en résine thermoplastique ignifuge selon l'une des revendications précédentes, dans laquelle ledit poly phénylène éther (B) est un poly (2,6-diméthyl-1,4-phénylène) éther.

8. La composition en résine thermoplastique ignifuge selon l'une des revendications précédentes, dans laquelle ledit copolymère contenant du styrène (C) est en outre copolymérisé avec un monomère copolymérisable.

9. La composition en résine thermoplastique ignifuge selon la revendication 8, dans laquelle ledit monomère copolymérisable est sélectionné à partir du groupe comprenant le méthacrylate, l'anhydride maléique, et le phényle maleimide.

10. La composition en résine thermoplastique ignifuge selon l'une des revendications précédentes, dans laquelle la composition en résine comprend en outre 0 à 30 parties en poids d'une résine sélectionnée à partir du groupe comprenant le polyamide, le polycarbonate, le polyester, le polystyrène, le polystyrène renforcé en caoutchouc, le polyacétal, le méthyle d'acide polyméthacryle, la résine de silicone et un mélange de ceux-ci, pour 100 parties en poids de ladite résine de base (A) et (B).

11. La composition en résine thermoplastique ignifuge selon l'une des revendications 1 à 10, dans laquelle la composition en résine comprend en outre un agent anti-ruissellement, un modificateur d'impact, un plastifiant, un stabilisant thermique, un antioxydant, un stabilisant de lumière, un agent de compatibilité, un pigment, un colorant et/ou un enduit inorganique.

12. Un article moulé produit à partir de la composition en résine thermoplastique ignifuge comme définie dans l'une des revendications 1 à 11.
